# EUROPÄISCHE PATENTSCHRIFT

(11) **EP 3 309 644 B1**
(45) Veröffentlichungstag und Bekanntmachung des Hinweises auf die Patenterteilung: **01.07.2020**
(21) Anmeldenummer: 17001630.7
(22) Anmeldetag: 05.10.2017
(51) Int. Cl.: G05D 16/20

(54) **VENTILVORRICHTUNG SOWIE DRUCKREGELSYSTEM MIT EINER SOLCHEN VENTILVORRICHTUNG**
VALVE DEVICE AND PRESSURE CONTROL SYSTEM WITH SUCH A VALVE DEVICE
DISPOSITIF DE SOUPAPE AINSI QUE SYSTÈME DE RÉGLAGE DE PRESSION POURVU D'UN TEL DISPOSITIF DE SOUPAPE

(30) Priorität: 14.10.2016 DE 102016012335
(43) Veröffentlichungstag der Anmeldung: 18.04.2018
(73) Patentinhaber: Hydac Fluidtechnik GmbH, 66280 Sulzbach/Saar (DE)
(72) Erfinder: Bruck, Peter, 66484 Althornbach (DE); Bill, Markus, 66571 Eppelborn (DE); Hilzendegen, Philipp, 66687 Wadern (DE)
(74) Vertreter: Bartels und Partner, Patentanwälte

(56) Entgegenhaltungen:
- DE-A1- 10 325 177
- DE-A1-102010 039 917
- DE-A1-102014 202 411

## Beschreibung

Die Erfindung betrifft eine Ventilvorrichtung mit den Merkmalen im Oberbegriff des Anspruchs 1. Die Erfindung betrifft ferner ein Druckregelsystem mit einer solchen Ventilvorrichtung.

Durch die DE 103 25 1 77 A1 ist ein Proportional-Druckregelventil bekannt zum Ansteuern von Fluidströmen mit einem Ventilgehäuse, das mindestens drei fluidführende Anschlüsse aufweist, insbesondere in Form eines Pumpenanschlusses als Primäranschluss, eines Nutzanschlusses als Sekundäranschluss und eines Tankanschlusses als Rücklaufanschluss, wobei innerhalb des Ventilgehäuses zum wahlweisen Verbinden des Primäranschlusses mit dem Sekundäranschluss sowie des Sekundäranschlusses mit dem Rücklaufanschluss ein Regelkolben längsverfahrbar geführt ist, der zum Herstellen einer fluidführenden Verbindung zwischen mindestens einem der Anschlüsse in Form des Primäranschlusses und einer Vorsteuerkammer eines Vorsteuerventils mit einem Verbindungskanal als Messanschluss im Ventil-oder Regelkolben versehen ist, der eine Drosselstelle aufweist. Das dahingehend bekannte Ventil genügt erhöhten Sicherheitsanforderungen an eine sinnfällige Betätigung, so dass es, insbesondere in hydraulischen Kupplungssystemen verwendet wird. Mit dem dahingehend ausgebildeten Proportional-Druckregelventil mit seinem angeschlossenen und bestrombaren Magnetsystem wird der Druck am Nutz- oder Sekundäranschluss in der Weise geregelt, dass bei Unterschreiten einer Sollvorgabe der Sekundäranschluss mit dem Primär- oder Druckversorgungsanschluss gekoppelt wird und somit der Sekundäranschluss so lange mit frischem Hydraulikmedium versorgt wird, bis der Sollwertdruck wieder hergestellt ist. Im umgekehrten Fall, bei dem der Sekundärdruck oberhalb des Sollwerts liegt, öffnet die Verbindung vom Sekundäranschluss zum Tankanschluss hin, und es wird so lange Hydraulikmedium vom Sekundäranschluss über den Rücklaufanschluss zum Tank gefördert, bis der Druck sich wieder auf das Sollwertniveau abgesenkt hat.

Sofern solche Proportional-Druckregelventile mit einer sogenannten inversen Kennlinie versehen sind, bedeutet dies, dass der Regeldruck des Proportionalventils im nicht bestromten Zustand einen mechanisch einstellbaren Maximalwert annimmt und dann in Abhängigkeit des Magnetstromes im Magnetsystem proportional abgesenkt werden kann, und zwar auf Nulldruck bzw. je nach Bauart auf einen geringen Offset-Wert.

Die DE 10 2014 202 411 A1 offenbart eine Ventilvorrichtung, insbesondere in Form eines Proportional-Druckregelventils, mit einem Ventilkolben, der längsverfahrbar in einem Ventilgehäuse geführt ist, das mindestens drei Fluid-Anschlussstellen aufweist in Form eines Primär-, eines Sekundär- und eines Rücklaufanschlusses und mit einem Messanschluss, der für eine Druckregelung eingesetzt ist und permanent sowohl mit dem Primäranschluss als auch mit einer Steuerkammer auf einer dem Primäranschluss gegenüberliegenden Seite des Ventilkolbens verbunden ist, wobei bei Unterschreiten eines Sollwertdrucks eine Verbindung von Sekundäranschluss zum Rücklaufanschluss und bei Überschreiten des Sollwertdrucks eine fluidführende Verbindung von Primäranschluss zum Sekundäranschluss mittels des Ventilkolbens hergestellt ist.

Weitere Ventilvorrichtungen gehen aus der DE 10 2010 039 917 A1 und der DE 103 25 177 A1 hervor.

Ausgehend von diesem Stand der Technik liegt der Erfindung die Aufgabe zugrunde, ein an sich bekanntes Proportional-Druckregelventil derart weiter zu gestalten, dass die Einsatzmöglichkeiten für ein solches Ventil erweitert sind. Eine dahingehende Aufgabe löst eine Ventilvorrichtung mit den Merkmalen des Patentanspruchs 1 in seiner Gesamtheit.

Gemäß dem kennzeichnenden Teil des Patentanspruches 1 ist die erfindungsgemäße Ventilvorrichtung dadurch gekennzeichnet, dass der Messanschluss im Ventilkolben angeordnet und permanent vom Sekundäranschluss (A) separiert ist.

Dadurch, dass bei Unterschreiten eines Sollwertdrucks eine Verbindung von Sekundäranschluss zum Rücklaufanschluss und bei Überschreiten des Sollwertdrucks eine fluidführende Verbindung von Primäranschluss zum Sekundäranschluss mittels des Ventilkolbens hergestellt ist, ist eine Fluidführung geschaffen, die nun gerade umgekehrt zu der vorstehend beschriebenen Lösung im Stand der Technik eine fluidführende Verbindung zwischen den verschiedenen Fluidanschlüssen vorsieht.

Diese "umgedrehte" Druckregelung ermöglicht jetzt das Vorsteuern einer Reglerkomponente, beispielsweise in Form eines Stellzylinders bei einem Pumpenregler, der bei einem geringen Vorsteuerdruck das System versorgt und bei einem hohen Vorsteuerdruck das System nicht mehr versorgt.

Der Ausgangsdruck des Pumpenreglers dient dabei als Messgröße für den Messanschluss der erfindungsgemäß konzipierten Ventilvorrichtung, und der Ausgangsdruck dieser Ventilvorrichtung dient als Stellgröße für die Reglerkomponente des Pumpenreglers. Die angesprochene Anordnung der Fluidanschlüsse bei der Ventilvorrichtung mit der permanenten Trennung von Messanschluss und Sekundäranschluss und der daraus sich ergebenden möglichen Invertierung der Fluidführung ermöglicht so in Verbindung mit der im Prinzip ebenfalls invers ausgelegten Reglerkomponente, beispielsweise in Form des Pumpenreglers, eine einfache Systemdruckregelung.

Des Weiteren kann mit der erfindungsgemäßen Ventilvorrichtung auch ein Regelkreis zusammen mit einer Druckwaage oder einem Logikelement oder einer weiteren Druckreglerhauptstufe gebildet werden.

Unabhängig von der aufgezeigten inversen Fluidführung ist es weiterhin möglich, das vorgesteuerte Proportional-Druckregelventil mit einer inversen Vorsteuerung auszustatten. Somit ist es möglich, den Systemdruck im drucklosen Zustand auf einen mechanisch einstellbaren Wert zu halten und den Druck dann mit stetig steigendem Magnetstrom abzusenken. Darüber hinaus ist auch nach wie vor mit der erfindungsgemäßen Ventilvorrichtung die Realisierung einer konventionellen Vorsteuerung möglich. Diese ist im stromlosen Zustand dann fast drucklos und mit steigendem Magnetstrom im Magnetsystem des Ventils wird ein proportional steigender Systemdruck erzeugt. Im Übrigen ist es auch möglich, eine inverse Kennlinie mit einem drückenden Magnetsystem zu realisieren.

Weitere vorteilhafte Ausführungsformen der erfindungsgemäßen Ventilvorrichtung sind Gegenstand der Unteransprüche.

Die Erfindung betrifft des Weiteren ein Druckregelsystem mit einer Ventilvorrichtung wie vorstehend beschrieben gemäß der Merkmalsausgestaltung des Patentanspruches 9 mit der Maßgabe, dass ein Ausgangsdruck eines Reglers oder einer Reglerkomponente des zu regelnden Systems als Messeingangsgröße am Messanschluss der Ventilvorrichtung dient und dass der Ausgangsdruck am Sekundäranschluss der Ventilvorrichtung wiederum als Stellgröße für eine Einstelleinrichtung dieses Reglers oder der Reglerkomponente dient.

Im Folgenden werden eine erfindungsgemäße Ventilvorrichtung sowie ein damit aufgebautes Druckregelsystem anhand eines Ausführungsbeispieles nach der Zeichnung näher erläutert. Dabei zeigen in prinzipieller und nicht maßstäblicher Darstellung die
- Fig. 1: in der Art einer Schnittdarstellung die Ventilvorrichtung als Ganzes; und
- Fig. 2: in der Art eines prinzipiellen hydraulischen Schaltplans die Anwendung der Ventilvorrichtung für ein Druckregelsystem, beispielsweise zur Ansteuerung eines Lüftermotors.

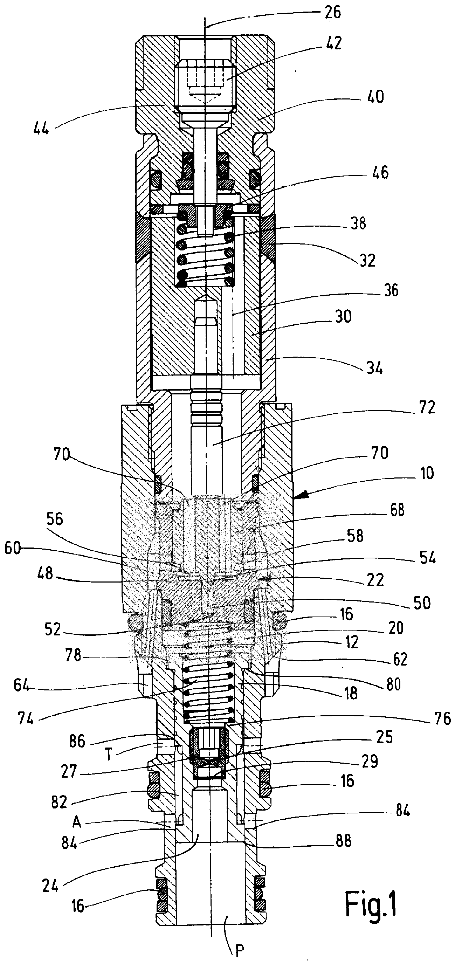

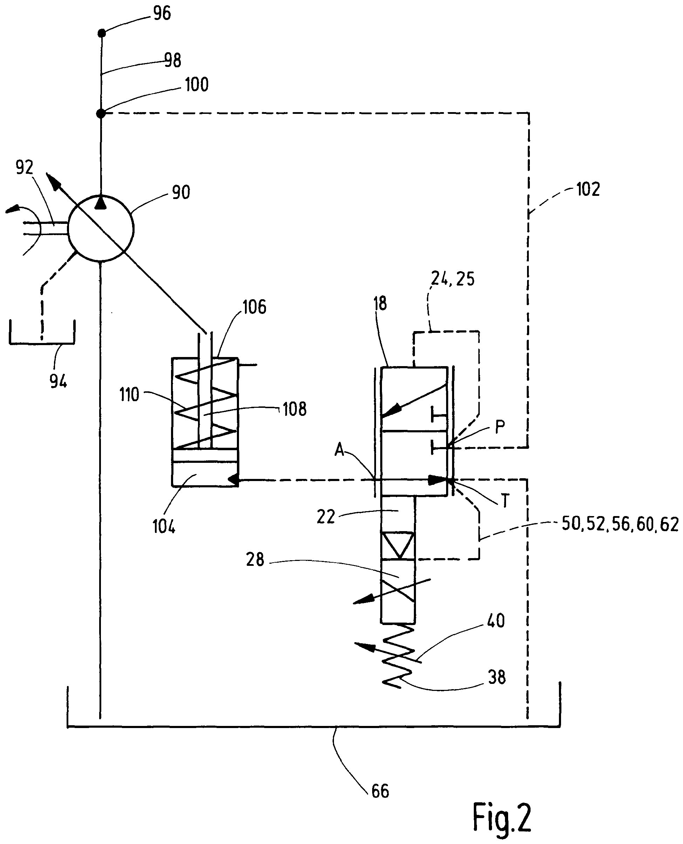

Die erfindungsgemäße Ventilvorrichtung in Form eines Proportional-Druckregelventils mit einer sogenannten inversen Vorsteuerung ist von seinem wesentlichen Aufbau her in der Fig. 1 dargestellt. Es weist in der Art einer Einschraubpatrone respektive in Form eines Cartridge-Ventils ausgebildet ein als Ganzes mit 10 bezeichnetes Ventilgehäuse auf, das sich dergestalt über eine Einschraubstrecke 12 in ein Maschinenteil, beispielsweise in Form eines Ventilblockes (nicht dargestellt) oder dergleichen einschrauben oder anbringen lässt. Für die dahingehende Verbindung ist das Ventilgehäuse 10 außenumfangsseitig mit entsprechenden Dichtringen 16 nebst den zugehörigen üblichen Aufnahmen für das Dichtsystem versehen. Das Ventilgehäuse 10 weist ferner in Blickrichtung auf die Fig. 1 gesehen von unten nach oben einen Primäranschluss P, einen Sekundäranschluss A sowie einen zum Tank führenden Rücklaufanschluss T auf, der im Folgenden auch mit Tankanschluss T bezeichnet ist. Der Primäranschluss P ist stirnseitig in das Ventilgehäuse 10 eingebracht und dient der Druckversorgung der Ventilvorrichtung. Der Sekundäranschluss A bildet eine Art Nutzanschluss für ein Druckreglersystem nach der Fig. 2 aus, was im Folgenden noch näher erläutert wird. Des Weiteren ist innerhalb des Ventilgehäuses 10 zum wahlweisen fluidführenden Verbinden von Primäranschluss P zum Sekundäranschluss A und von diesem Sekundäranschluss A zum Rücklaufanschluss T ein Ventil- oder Regelkolben 18 längsverfahrbar geführt. Der Sekundäranschluss A sowie der Rücklaufanschluss T sind durch eine Vielzahl von diametral einander gegenüberliegenden Radialbohrungen im Ventilgehäuse 10 gebildet.

Zum Herstellen einer permanenten fluidführenden Verbindung zwischen dem Primäranschluss P und einer Vorsteuerkammer 20 eines als Ganzes mit 22 bezeichneten Vorsteuerventils ist der Ventilkolben 18 mit einem Verbindungskanal 24 versehen, der in Längsrichtung 26 des gesamten Ventils mittig den Ventilkolben 18 durchgreift, wobei der Verbindungskanal 24 in etwa mittig des Ventilkolbens 18 mit einer Blende oder Drossel 25 versehen ist. Die dahingehende Blenden- oder Drosselstelle 25 ist mittels eines Einsatzteiles 27 realisiert, das wie dargestellt in den Ventilkolben 18 einschraubbar ist. An seinem unteren, dem Primäranschluss P zugewandten Ende ist das Einsatzteil 27 zum Abhalten von Verschmutzungen mit einem Lochsieb 29 versehen. Der am unteren Ende des Ventilkolbens 18 ausmündende Verbindungskanal 24 bildet insoweit den Messanschluss der Ventilvorrichtung aus, der permanent mit dem Primärdruckanschluss P in fluidführender Verbindung steht.

Des Weiteren ist das genannte Vorsteuerventil 22 über ein als Ganzes mit 28 bezeichnetes Magnetsystem, insbesondere in Form eines Proportional-Magnetsystems ansteuerbar. Dahingehende Magnetsysteme 28 weisen regelmäßig eine zu bestromende Spulenwicklung (nicht dargestellt) auf, wobei hierfür das Magnetsystem 28 über ein entsprechend elektrisches Anschlussteil verfügt. Das Magnetsystem 28 ist in der Fig. 2 nur in Form eines Schaltplansymbols wiedergegeben und der einfacheren Darstellung wegen in der Fig. 1 nur im Umfang seines Magnetankers 30 und seiner magnetischen Trennung 32 wiedergegeben. Der dahingehende Aufbau ist bei solchen Magnetsystemen 28 jedoch üblich, so dass an dieser Stelle hierauf nicht mehr näher eingegangen wird.

Bei dem Ausführungsbeispiel nach der Fig. 1 ist das Magnetsystem 28 als sogenannter ziehender Magnet ausgebildet, d.h. bei einer Bestromung der nicht näher dargestellten Spulenwicklung nimmt der Magnetanker 30 eine obere Position ein, wie sie beispielhaft in der Fig. 1 gezeigt ist. Der zylindrisch ausgestaltete Magnetanker 30 ist dabei längsverfahrbar in einer Umhausung 34 als Bestandteil des Ventilgehäuses 10 geführt, deren Wandteile durch die bereits angesprochene magnetische Trennung 32 voneinander separiert sind. Für eine hemmnisfreie Bewegung weist der Magnetanker 30 einen parallel zur Längsrichtung 26 des Ventils führenden Ausgleichskanal 36, vorzugsweise in Form einer Durchgangsbohrung, auf.

Ferner muss das Magnetsystem 28 als ziehender Magnet den Magnetanker 30 entgegen der Wirkung eines Energiespeichers, vorzugsweise in Form einer Druckfeder 38, bewegen, die zumindest teilweise in einer Innenausnehmung des Magnetankers 30 geführt ist. Zum Einstellen der Federkraft dieser Druckfeder 38 dient eine Einstelleinrichtung 40 mit einer Einstellschraube 42, die drehbar in einem weiteren Ventilgehäuseteil 44 geführt ist, das am oberen Ende der Umhausung 34 durch Bördeln an dieser Umhausung 34 festgelegt ist. Die Druckfeder 38 stützt sich gemäß der Darstellung nach der Fig. 1 mit ihrem unteren Ende an dem Magnetanker 30 ab und an ihrem oberen Ende an einer Einstellplatte 46 als Teil der Einstelleinrichtung 40, wobei die Einstellplatte 46 mittels der Einstellschraube 42 in Längsrichtung der Ventilvorrichtung sich axial einstellen lässt, um dergestalt die Federkraft der Druckfeder 38 wahlweise zu erhöhen oder zu erniedrigen.

Als Teil des Vorsteuerventils 22 ist in dem Ventilgehäuse 10 ein Zwischenteil 48 in dichtender Weise festgelegt, das einen Mittenkanal 50 aufweist, der an seinem unteren Ende mit einer weiteren Drossel oder Blende 52 versehen in die Vorsteuerkammer 20 ausmündet. Des Weiteren ist der Mittenkanal 50 an seinem oberen Ende von einem Schließkegel 54 verschlossen, der, sofern er von seinem Ventilsitz am Zwischenteil 48 abhebt (nicht dargestellt), die fluidführende Verbindung über die Vorsteuerkammer 20 sowie die weitere Drossel oder Blende 52 in eine nachgeschaltete Ablaufkammer 56 freigibt, die über im gehäuseartigen Zwischenteil 48 eingebrachte Radialbohrungen 58 in einen Ablaufraum 60 ausmündet, der durch eine kammerartige Verbreiterung zwischen der Außenseite des Zwischenteils 48 und der Innenseite des Ventilgehäuses 10 gebildet ist und der über Schrägbohrungen 62 an eine Kanalführung 64 angeschlossen ist, die zusammen mit dem Rücklaufanschluss T zu einem Vorratstank 66 (s. Fig. 2) führt. Die dahingehend nur teilweise dargestellte Kanalführung 64 ist im Übrigen durch die Außenkontur der Ventilvorrichtung gebildet sowie durch einen nicht näher dargestellten Innenraum eines Ventilblockes, in die die Ventilvorrichtung als Einschraubpatrone festgelegt ist.

Der Schließkegel 54 ist einstückiger Bestandteil eines Vorsteuerkolbens 68, der längsverfahrbar im zylindrischen Zwischenteil 48 geführt ist. Der dahingehende Vorsteuerkolben 68 weist wiederum für einen hemmnisfreien Betrieb Längsbohrungen 70 auf. An seinem oberen Ende stützt sich der Vorsteuerkolben 68 an einem Betätigungsstößel 72 ab, der mit seinem oberen Ende unter Bildung einer Wirkverbindung am Magnetanker 30 festgelegt ist.

Wird das ziehende Magnetsystem 28 bestromt, bewegt sich in Blickrichtung auf die Fig. 1 gesehen der Magnetanker 30 nach oben, und der Vorsteuerkolben 68 kann mit seinem Schließkegel 54 vom Ventilsitz am Zwischenteil 48 abheben, wobei dann, wie bereits dargelegt, in der Art eines Leckagestroms unter Druck stehendes Fluid aus der Fluidkammer 20 über die Schrägbohrungen 62 zum Tank 66 hin abfließen kann. Bleibt das Magnetsystem 28 unbestromt, drückt die Druckfeder 38 den Magnetanker 30 nach unten und durch den stangenartigen Betätigungsstößel 72 wird der Vorsteuerkolben 68 mit seinem Schließkegel 64 wiederum, wie in Fig. 1 dargestellt, auf den Ventilsitz im Zwischenteil 48 gedrückt, so dass die angesprochene fluidführende Verbindung unterbrochen ist.

Wie sich des Weiteren aus der Fig. 1 ergibt, ist innerhalb des Ventilkolbens 18 ein weiterer Energiespeicher, insbesondere in Form einer weiteren Druckfeder 74 geführt, die sich mit ihrem oberen Ende am stationären Zwischenteil 48 abstützt und mit ihrem unteren Ende an einer stufenförmig nach innen vorspringenden Anlagefläche 76 im Ventilkolben 18. Mithin erstreckt sich die Druckfeder 74 mit ihren beiden einander gegenüberliegenden Enden zwischen den genannten Drossel- oder Blendenstellen 25 und 52. Der Ventilkolben 18 ist unter der Wirkung der weiteren Druckfeder 74 gemäß der Darstellung nach der Fig. 1 in einer unteren Anschlagstellung gehalten, bei der eine ringförmige Verbreiterung 78 des Ventilkolbens 18 in Anlage ist mit einer Anlagestufe 80 auf der Innenseite des Ventilgehäuses 10. Im Übrigen ist die Druckfeder 74 weniger steif ausgebildet als die Druckfeder 38.

Des Weiteren ist in den Außenumfang des Ventilkolbens 18 ein umlaufender Ringkanal 82 eingebracht, der in der gezeigten Anlage- oder Anschlagstellung des Ventilkolbens 18 nach der Fig. 1 von seiner axialen Erstreckung her in Längsrichtung 26 der Ventilvorrichtung gesehen mit seinen beiden Steuerkanten 84 und 86 in etwa auf den Mittenachsen der Radialbohrungen für den Sekundäranschluss A bzw. den Rücklaufanschluss T ausmündet. Die beiden genannten zylindrischen Steuerkanten 84 und 86 liegen dabei auf einem gemeinsamen Außendurchmesser des Ventilkolbens 18, der über seine gesamte Länge bis auf seine Verbreiterung 78 am oberen Ende gleichbleibend gestaltet ist.

In der in der Fig. 1 gezeigten Regelstellung des Ventilkolbens 18 ist demgemäß der Primäranschluss P vom Sekundäranschluss A und dem Rücklaufanschluss T getrennt, wohingegen der Sekundäranschluss A über den Ringkanal 82 im Ventilkolben 18 mit dem Rücklaufanschluss T in geregelter Weise verbunden ist. Ist das Vorsteuerventil 22 in einer geöffneten Stellung und/oder ist ein Eingangsdruck am Primäranschluss P der Ventilvorrichtung entsprechend groß, wird der Ventilkolben 18 aus seiner in der Fig. 1 gezeigten Anschlagposition entgegen der Wirkung der weiteren Druckfeder 74 bewegt, und die angesprochene fluidführende Verbindung über den Ringkanal 82 zwischen Sekundäranschluss A und Rücklaufanschluss T wird unterbrochen. Im dahingehenden Fall wird über eine weitere Steuerkante 88 am Außenumfang an der freien Stirnseite des Ventilkolbens 18 der Fluidstrom vom Primäranschluss P zum Sekundäranschluss A je nach den Abnahmeerfordernissen am Sekundäranschluss A geregelt. Bei Unterschreiten eines Sollwertdruckes kommt es also zu einer Verbindung von Sekundäranschluss A zum Rücklaufanschluss T, und bei Überschreiten des dahingehenden Sollwertdruckes wird eine fluidführende Verbindung von Primäranschluss P zum Sekundäranschluss A hergestellt, was anhand des Anwendungsbeispiels betreffend ein Druckregelsystem nach der Fig. 2 noch näher erläutert werden wird.

Festzuhalten bleibt an dieser Stelle noch, dass anstelle des ziehenden Magnetsystems 28 auch ein drückendes Magnetsystem zum Einsatz kommen kann, so dass dann die Ventilvorrichtung eine konventionelle Vorsteuerung aufweisen kann. Derart ist mit der angesprochenen Ventilvorrichtung eine Art modulares Baukastensystem realisierbar, mit der sich eine Vielzahl von Anwendungsfällen in der Praxis abdecken lassen. Dies hat so keine Entsprechung im Stand der Technik.

Im Folgenden wird nunmehr anhand der Fig. 2 die Verwendung der vorstehenden Ventilvorrichtung bei einem Druckregelsystem näher beschrieben. Eine hydraulische Schwenkwinkelpumpe 90 üblicher Bauart entnimmt Fluid, beispielsweise in Form von Hydrauliköl, aus dem Vorratstank 66. Die Schwenkwinkelpumpe 90 wird darüber hinaus in üblicher Weise über einen Motor (nicht dargestellt) und eine mit ihm verbundene Antriebachse 92 in Pfeilrichtung angetrieben. Die Schwenkwinkelpumpe 90 führt etwaig anfallende Leckagemenge in den Vorratstank 66 oder einen anderen Tank 94 zurück. Auf der Ausgangs- oder Abgabeseite 96 der schwerikwinkelpumpe 90 ist ein nicht näher dargestellter hydraulischer Verbraucher angeschlossen, beispielsweise in Form eines hydraulischen Lüftermotors für eine Fluidkühlung. Zwischen der Anschlussstelle 96 und der Förder-Ausgangsseite der Schwenkwinkelpumpe 90 ist in eine dahingehende Verbindungsleitung 98 an einer Abzweigstelle 100 der Primäranschluss P der vorstehend beschriebenen Ventilvorrichtung über eine Anschlussleitung 102 permanent medienführend angeschlossen.

Über den angesprochenen Messanschluss der Ventilvorrichtung in Form des Verbindungskanals 24 mit der Drossel oder Blende 25 wird der an der Ventilvorrichtung am Primäranschluss P anstehende Druck mit für die Druckregelung des Ventilkolbens 18 eingesetzt. Des Weiteren ist der Rücklaufanschluss T der Ventilvorrichtung an den Vorratstank 66 angeschlossen, wobei über das Vorsteuerventil 22 bei geöffnetem Vorsteuerkolben 68 in der Vorsteuerkammer 20 befindliches Fluidmedium über den Mittenkanal 50 mit zweiter Drossel oder Blende 52 sowie die Ablaufkammer 56 und den Ablaufraum 60 in die Schrägbohrung 62 zum Tank 66 hin abfließt. Der einfacheren Darstellung wegen wurde auf die Wiedergabe der zweiten Druckfeder 74 in der Fig. 2 verzichtet.

Wie sich des Weiteren aus der Fig. 2 ergibt, ist der Sekundäranschluss A auf der Kolbenseite 104 eines Hydraulikzylinders 106 angeschlossen und der Kolben der dahingehenden Kolbenstangeneinheit 108 ist von einer weiteren dritten Druckfeder 110 stangenseitig permanent beaufschlagt. Insoweit bildet der Hydraulikzylinder 106 die Regelkomponente für die Schwenkwinkelpumpe 90 als Druckregler aus. Wird die Kolbenstangeneinheit 108 entgegen der Wirkung der Druckfeder 110 bei entsprechend erhöhtem Druck auf der Kolbenseite 104 ausgefahren, nimmt das Fördervolumen der Schwenkwinkelpumpe 90 auf ihrer Ausgangsförderseite ab und der Fluiddruck fällt. In entgegengesetzter Bewegungsrichtung, also bei Einfahren der Kolbenstangeneinheit 108 unter Mitwirkung der Druckfeder 110, wird die Schwenkwinkelpumpe 90 derart angesteuert, dass ihre Fördermenge steigt und der Förderdruck entsprechend zunimmt. Der Ausgangsdruck des Pumpenreglers unter Einbezug der Schwenkwinkelpumpe 90 dient dann als Messgröße auf der Primäranschlussseite der Ventilvorrichtung und der Ausgangsdruck am Sekundäranschluss A dient, wie dargestellt, als Stellgröße für den hydraulischen Stellzylinder 106.

Dadurch, dass im angesprochenen Druckregelsystem mit der erfindungsgemäßen Ventilvorrichtung im unbetätigten und/oder primärseitig druckaktivierten Zustand eine Verbindung von Primäranschluss P zum Sekundäranschluss A sowie im betätigten und/oder nicht druckaktivierten Zustand eine Verbindung zwischen dem Sekundäranschluss A und dem Rücklaufanschluss T hergestellt ist, ist das Vorsteuern der Reglerkomponente in Form des Stellzylinders 106 des Pumpenreglers 90 möglich, der bei einem geringen Vorsteuerdruck das angeschlossene System, hier in Form des nicht näher dargestellten Lüftermotors, versorgt und bei einem zu hohen Vorsteuerdruck dieses System nicht mehr versorgt. Dergestalt lässt sich ein sicherer Betrieb des angeschlossenen Lüftermotors innerhalb seiner vorgesehenen Betriebsgrenzen erreichen. Wird also der Druck an Anschluss P des Druckregelventils größer als die entsprechende Vorgabe des Aktuators, gebildet aus Federkraft und Magnetkraft, verbindet das Ventil die Anschlussstellen P und A miteinander. Wenn die Vorgabe des Aktuators größer ist als der Druck am Anschluss P, wird durch das Ventil eine Verbindung Anschluss A mit Anschluss T hergestellt.

## Patentansprüche

1. Ventilvorrichtung, insbesondere in Form eines Proportional-Druckregelventils, mit einem Ventilkolben (18), der längsverfahrbar in einem Ventilgehäuse (10) geführt ist, das mindestens drei Fluid-Anschlussstellen aufweist in Form eines Primär- (P), eines Sekundär-(A) und eines Rücklaufanschlusses (T) und mit einem Messanschluss (24), der für eine Druckregelung eingesetzt ist und permanent sowohl mit dem Primäranschluss (P) als auch mit einer Steuerkammer (20) auf einer dem Primäranschluss (P) gegenüberliegenden Seite des Ventilkolbens (18) verbunden ist, wobei bei Unterschreiten eines Sollwertdrucks eine Verbindung von Sekundäranschluss (A) zum Rücklaufanschluss (T) und bei Überschreiten des Sollwertdrucks eine fluidführende Verbindung von Primäranschluss (P) zum Sekundäranschluss (A) mittels des Ventilkolbens (18) hergestellt ist, **dadurch gekennzeichnet, dass** der Messanschluss im Ventilkolben (18) angeordnet und permanent vom Sekundäranschluss (A) separiert ist.

2. Ventilvorrichtung nach Anspruch 1, **dadurch gekennzeichnet, dass** zum Betätigen des Ventilkolbens (18) eine Vorsteuerung mit einem bestrombaren Magnetsystem (28) und/oder einem Energiespeicher (38) vorgesehen ist.

3. Ventilvorrichtung nach Anspruch 1 oder 2, **dadurch gekennzeichnet, dass** für den Erhalt einer inversen Vorsteuerung vorzugsweise ein ziehendes Magnetsystem (28) und für den Erhalt einer normalen Vorsteuerung ein drückendes Magnetsystem eingesetzt ist.

4. Ventilvorrichtung nach einem der vorstehenden Ansprüche, **dadurch gekennzeichnet, dass** aufseiten des Primäranschlusses (P) über den Messanschluss ein Messen eines anstehenden Systemdrucks erfolgt und aufseiten des Sekundäranschlusses (A) ein Reagieren auf den gemessenen Systemdruck zwecks dessen Beeinflussung erfolgt.

5. Ventilvorrichtung nach einem der vorstehenden Ansprüche, **dadurch gekennzeichnet, dass** der Ventilkolben (18) außenumfangsseitig einen Ringkanal (82) aufweist, dessen axiale Erstreckung in Verfahrrichtung des Ventilkolbens (18) gesehen mindestens so groß ist, dass die radial in das Ventilgehäuse (10) jeweils eintretenden Sekundär- (A) und Rücklaufanschlüsse (T) fluidführend miteinander verbindbar sind.

6. Ventilvorrichtung nach einem der vorstehenden Ansprüche, **dadurch gekennzeichnet, dass** an der freien Stirnseite des Ventilkolbens (18) in Richtung des Primäranschlusses (P) eine Steuerkante (88) verwirklicht ist, die mit dem jeweiligen Sekundäranschluss (A) in einer Regelstellung des Ventilkolbens (18) zusammenwirkt.

7. Ventilvorrichtung nach einem der vorstehenden Ansprüche, **dadurch gekennzeichnet, dass** der Messanschluss durch einen Verbindungskanal (24) mit einer Blende (25) oder Drossel im Ventilkolben (18) realisiert ist, der auf seiner dem Vorsteuerventil (22) zugewandten Seite sich an einem weiteren Energiespeicher (74) abstützt.

8. Ventilvorrichtung nach einem der vorstehenden Ansprüche, **dadurch gekennzeichnet, dass** sie als Cartridge-Ventil konzipiert ist.

9. Druckregelsystem mit einer Ventilvorrichtung nach einem der vorstehenden Ansprüche, **dadurch gekennzeichnet, dass** ein Ausgangsdruck einer Pumpe (90) des zu regelnden Systems als Messeingangsgröße am Messanschluss der Ventilvorrichtung dient und dass der Ausgangsdruck am Sekundäranschluss (A) der Ventilvorrichtung als Stellgröße für eine Einstelleinrichtung (106) dieser Druckpumpe (90) dient.

## Claims

1. Valve device, in particular in the form of a proportional pressure control valve, with a valve piston (18) which is guided so as to be longitudinally movable in a valve housing (10), said housing having at least three fluid connection points in the form of one primary (P), one secondary (A) and one return connection (T) and with a measuring connection (24), which is used for pressure control and is permanently connected to the primary connection (P) and also to a pilot chamber (20) on a side of the valve piston (18) opposing the primary connection (P), wherein on failing to reach a setpoint pressure, a connection is made from the secondary connection (A) to the return connection (T) and, if the setpoint pressure is exceeded, a fluidic connection is made from the primary connection (P) to the secondary connection (A) by means of the valve piston (18), **characterised in that** the measuring connection is arranged in the valve piston (18) and is permanently separated from the secondary connection (A).

2. Valve device according to claim 1, **characterised in that** a pilot control with an energisable magnet system (28) and/or an energy accumulator (38) is provided to actuate the valve piston (18).

3. Valve device according to claim 1 or 2, **characterised in that** preferably a pulling magnet system (28) is used to obtain an inverse pilot control and a pushing magnet system to obtain a normal pilot control.

4. Valve device according to one of the preceding claims, **characterised in that** measurement of an existing system pressure takes place via the measuring connection on the part of the primary connection (P) and a response to the measured system pressure takes place on the part of the secondary connection (A) for the purpose of influencing said system pressure.

5. Valve device according to one of the preceding claims, **characterised in that** the valve piston (18) has an annular groove (82) on the outer circumference, the axial extension of which when viewed in the direction of travel of the valve piston (18) is at least so large that the secondary (A) and return connections (T), which each enter the valve housing (10) radially, can be joined together fluidically.

6. Valve device according to one of the preceding claims, **characterised in that** a control edge (88) is realised on the free front face of the valve piston (18) in the direction of the primary connection (P), said control edge cooperating with the respective secondary connection (A) in a control position of the valve piston (18).

7. Valve device according to one of the preceding claims, **characterised in that** the measuring connection is implemented by a connecting channel (24) with an orifice (25) or throttle in the valve piston (18) which, on its side directed towards the pilot valve (22), rests on a further energy accumulator (74).

8. Valve device according to one of the preceding claims, **characterised in that** it is designed as a cartridge valve.

9. Pressure control system with a valve device according to one of the preceding claims, **characterised in that** an initial pressure of a pump (90) of the system to be controlled is used as the measuring input variable at the measuring connection of the valve device and that the initial pressure at the secondary connection (A) of the valve device is used as a control variable for an adjusting device (106) of this pressure pump (90).

## Revendications

1. Dispositif de soupape, notamment sous la forme d'une soupape de régulation de la pression proportionnelle, comprenant un piston (18) de soupape qui est guidé avec possibilité de se déplacer longitudinalement dans un corps (10) de la soupape, qui a au moins trois points de raccordement de fluide sous la forme d'un raccord (P) primaire, d'un raccord (A) secondaire et d'un raccord (T) de retour et ayant un raccord (24) de mesure qui est utilisé pour une régulation de la pression et qui communique en permanence à la fois avec le raccord (P) primaire et avec une chambre (20) de commande d'un côté, opposé au raccord (P) primaire, du piston (18) de la soupape, dans lequel, lorsque l'on passe en dessous d'une pression de valeur de consigne, il est ménagé une communication du raccord (A) secondaire au raccord (T) de retour, et lorsque la pression de valeur de consigne est dépassée, une communication fluidique du raccord (P) primaire au raccord (A) secondaire au moyen du piston (18) de la soupape, **caractérisé en ce que** le raccord de mesure est disposé dans le piston (18) de la soupape et est séparé en permanence du raccord (A) secondaire.

2. Dispositif de soupape suivant la revendication 1, **caractérisé en ce que**, pour actionner le piston (18) de la soupape, il est prévu un pilotage par un système (28) d'aimant pouvant être alimenté en courant et/ou par un accumulateur (38) d'énergie.

3. Dispositif de soupape suivant la revendication 1 ou 2, **caractérisé en ce que**, pour obtenir un pilotage inverse, il est utilisé de préférence un système (28) d'aimant de traction et, pour obtenir un pilotage normal, un système d'aimant de poussée.

4. Dispositif de soupape suivant l'une des revendications précédentes, **caractérisé en ce qu'**il se produit, du côté du rapport (P) primaire par le raccord de mesure, une mesure d'une pression appliquée de système et, du côté du raccord (A) secondaire, il se produit une réaction à la pression mesurée du système en vue de l'influencer.

5. Dispositif de soupape suivant l'une des revendications précédentes, **caractérisé en ce que** le piston (18) de la soupape a, du côté du pourtour extérieur, un canal (82) annulaire dont l'étendue axiale, considéré dans la direction de déplacement du piston (18) de la soupape, est au moins suffisamment grande pour que les raccords secondaire (A) et de retour (T) pénétrant chacun radialement dans le corps (10) de la soupape puissent communiquer entre eux fluidiquement.

6. Dispositif de soupape suivant l'une de revendications précédentes, **caractérisé en ce qu'**il est réalisé sur le côté frontal libre du piston (18) de la soupape, en direction du raccord (P) primaire, un bord (88) de commande qui coopère avec le raccord (A) secondaire respectif dans une position de régulation du piston (18) de la soupape.

7. Dispositif de soupape suivant l'une des revendications précédentes, **caractérisé en ce que** le raccord de mesure est réalisé par un canal (24) de liaison ayant un diaphragme (25) ou un étranglement dans le piston (18) de la soupape qui, du côté tourné vers la soupape (22) de pilotage, s'appuie sur un autre accumulateur (74) d'énergie.

8. Dispositif de soupape suivant l'une des revendications précédentes, **caractérisé en ce qu'**il est conçu en soupape Cartridge.

9. Système de régulation de la pression, comprenant un dispositif de soupape suivant l'une des revendications précédentes, **caractérisé en ce qu'**une pression de sortie d'une pompe (90) du système à réguler sert de grandeur d'entrée de mesure au raccord de mesure du dispositif de soupape et **en ce que** la pression de sortie au raccord (A) secondaire du dispositif de soupape sert de grandeur de réglage à un dispositif (106) de réglage de cette pompe (90) de refoulement.
